# FASCICULE DE BREVET EUROPEEN

(11) **EP 2 668 054 B1**
(45) Date de publication et mention de la délivrance du brevet: **08.06.2016**
(21) Numéro de dépôt: 11815482.2
(22) Date de dépôt: 20.12.2011
(51) Int. Cl.: B60W 20/00, B60K 6/12, B60K 6/46, F04B 49/00, F16H 61/4096, F16H 61/4148, B60W 10/06, B60W 30/192

(54) **PROCEDE DE CONTROLE D'UN MOTEUR DE RECHARGE ENTRAINANT UNE POMPE HYDRAULIQUE**
VERFAHREN ZUR STEUERUNG EINES NACHFÜLLMOTORS FÜR DEN ANTRIEB EINER HYDRAULIKPUMPE
METHOD FOR CONTROLLING A REFILLING MOTOR THAT DRIVES A HYDRAULIC PUMP

(30) Priorité: 27.01.2011 FR 1150633
(43) Date de publication de la demande: 04.12.2013
(73) Titulaire: Technoboost, 75116 Paris (FR)
(72) Inventeur: GOURVES, Frederic, F-95800 Courdimanche (FR)
(74) Mandataire: Ménès, Catherine
(86) Numéro de dépôt international: PCT/FR2011/053109
(87) Numéro de publication internationale: WO 2012/101340

(56) Documents cités:
- WO-A1-98/54450
- WO-A2-2008/049064
- FR-A1- 2 330 889
- FR-A1- 2 947 304

## Description

La présente invention concerne un procédé de contrôle pour un moteur de recharge d'une chaîne de traction équipant un véhicule hybride, comprenant un accumulateur de pression qui alimente une machine hydraulique de traction, elle concerne aussi une chaîne de traction et un véhicule automobile mettant en oeuvre ce procédé de contrôle.

Certains types de véhicules hybrides comportent une chaîne de traction comprenant un moteur thermique délivrant une énergie mécanique, qui entraîne une pompe hydraulique afin de recharger des accumulateurs de pression hydraulique pour stocker cette énergie.

Ces véhicules comportent de plus une machine hydraulique reliée à des roues motrices, pouvant fonctionner en moteur pour délivrer une puissance mécanique à ces roues motrices en prélevant de l'énergie stockée dans les accumulateurs de pression, ou en pompe pour charger ces accumulateurs en freinant le véhicule, de manière à récupérer l'énergie cinétique de ce véhicule. L'énergie stockée est par la suite restituée à la machine hydraulique fonctionnant en moteur, pour la traction du véhicule.

La machine hydraulique est généralement à cylindrée variable, pour ajuster les niveaux de couple et de puissance qui sont délivrés ou absorbés.

Cette utilisation d'énergie hydraulique stockée permet d'optimiser le fonctionnement du moteur thermique, et de réduire sa consommation ainsi que les émissions de gaz polluants. Le stockage d'énergie hydraulique permet de plus de rouler en mode hydraulique avec zéro émission « ZEV », le moteur thermique restant à l'arrêt.

En variante, le véhicule hybride peut comporter un moteur électrique entraînant la pompe de recharge des accumulateurs de pression, pour stocker dans ces accumulateurs une énergie hydraulique qui provient d'une source d'énergie électrique.

WO2008/049064 décrit un procédé selon le préambule de la revendication 1. Un procédé connu, présenté notamment par le document WO-A1-9854450, décrit un pilotage de la chaîne de traction pour maintenir des pressions sensiblement constantes dans les accumulateurs hydrauliques.

Toutefois, pour optimiser le fonctionnement de la chaîne de traction, on cherche généralement à exploiter au mieux les accumulateurs de pression en utilisant à chaque cycle une grande quantité d'énergie, en montant la pression jusqu'au seuil maximum, puis en les vidant jusqu'au un seuil minimum afin de retarder les démarrages du moteur de recharge et d'espacer ces démarrages.

Un problème qui se pose alors est d'optimiser le moment du redémarrage du moteur, en tenant compte du temps nécessaire pour son démarrage, et sans risquer un manque de pression dans l'accumulateur hydraulique qui entraînerait une perte de traction sur les roues motrices du véhicule.

La présente invention a notamment pour but d'éviter ces inconvénients de la technique antérieure, en proposant un procédé de contrôle qui permet de gérer au mieux les démarrages du moteur de recharge.

Elle propose à cet effet un procédé de contrôle d'un moteur de recharge entraînant une pompe hydraulique qui recharge au moins un accumulateur de pression, cet accumulateur délivrant ensuite la pression hydraulique à une machine hydraulique de traction d'un véhicule hybride, caractérisé en ce qu'il tient compte à la fois de la vitesse de décharge de l'accumulateur de pression, et du temps de démarrage du moteur de recharge, pour piloter ce démarrage de manière à ce que cet accumulateur atteigne sensiblement son niveau minimum de pression de fonctionnement à la fin de ce démarrage.

Un avantage de ce procédé de contrôle est qu'en tenant compte de la vitesse de décharge, il peut optimiser le moment du démarrage du moteur de recharge en le démarrant le plus tard possible, ce qui permet d'utiliser une plus grande réserve d'énergie stockée dans l'accumulateur de pression, et d'optimiser le fonctionnement de la chaîne cinématique.

Le procédé de contrôle selon l'invention peut de plus comporter une ou plusieurs des caractéristiques suivantes, qui peuvent être combinées entre elles.

Selon un mode de réalisation, le procédé de contrôle calcule un niveau d'énergie disponible contenu dans l'accumulateur de pression, à partir de la pression mesurée en permanence dans cet accumulateur, et du niveau minimum de pression de fonctionnement, et compare ce niveau d'énergie disponible avec la puissance hydraulique consommée par la machine hydraulique de traction, pour déterminer une pression correspondant au démarrage du moteur de recharge.

Avantageusement, la puissance consommée est calculée en mesurant la variation de pression de l'accumulateur par rapport au temps.

Avantageusement, pour un accumulateur comportant un gaz sous pression, le niveau minimum de pression de l'accumulateur, est supérieur à la pression résiduelle de gaz correspondant à une décharge complète de la pression de fluide dans le circuit hydraulique.

L'invention a aussi pour objet une chaîne de traction pour un véhicule hybride, comprenant un moteur de recharge entraînant une pompe hydraulique pour recharger au moins un accumulateur de pression qui alimente une machine hydraulique de traction de ce véhicule, caractérisée en ce qu'elle comporte un moyen de calcul qui calcule un niveau d'énergie disponible contenu dans l'accumulateur de pression, à partir de la pression mesurée en permanence dans cet accumulateur, et du niveau minimum de pression de fonctionnement, et un moyen de comparaison qui compare ce niveau d'énergie disponible avec la puissance hydraulique consommée par la machine hydraulique de traction, pour déterminer une pression correspondant au démarrage du moteur de recharge.

Avantageusement, la pompe et la machine hydraulique comportent des cylindrées variables.

Dans une application particulière, le moteur de recharge est un moteur thermique.

Avantageusement, l'accumulateur comporte un gaz sous pression.

L'invention a de plus pour objet un véhicule hybride disposant d'une chaîne de traction comportant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est un schéma d'une chaîne de traction selon l'invention mettant en oeuvre le procédé de contrôle selon l'invention ;
- la figure 2 présente trois vues en coupe axiale d'un accumulateur hydraulique de cette chaîne de traction, comprenant successivement trois niveaux de charge A, B et C ;
- la figure 3 est un graphique temporel présentant des démarrages du moteur de recharge ; et
- la figure 4 est un schéma fonctionnel du procédé de contrôle selon l'invention.

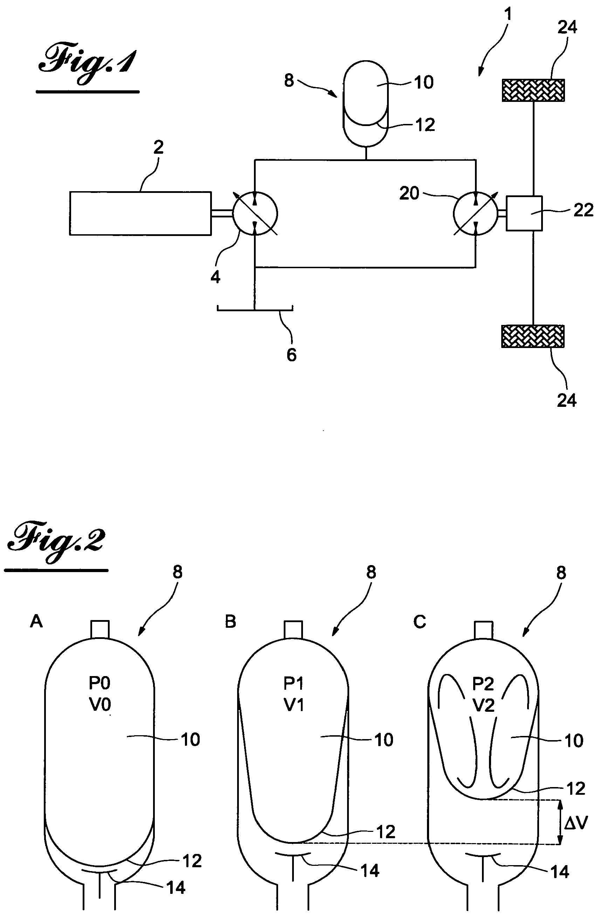

La figure 1 présente une chaîne de traction 1 d'un véhicule, comprenant un moteur thermique 2 qui entraîne une pompe à cylindrée variable 4. La pompe à cylindrée variable 4 pompe le fluide hydraulique à partir d'un réservoir 6, pour charger un accumulateur de pression 8.

L'accumulateur de pression 8 comporte une membrane souple 12, séparant un gaz sous pression 10 comprenant généralement de l'azote, du fluide qui se trouve maintenu de manière permanente à une pression sensiblement équivalente à celle du gaz.

Le fluide sous pression est ensuite utilisé par une machine hydraulique 20 à cylindrée variable travaillant en moteur, qui est reliée à un différentiel 22, et entraînant les deux roues motrices 24 d'un même essieu du véhicule, en répartissant la puissance entre ces roues. A l'inverse, pendant un freinage du véhicule, les roues motrices 24 peuvent entraîner la machine hydraulique 20 travaillant en pompe, pour recharger l'accumulateur de pression 8 et ainsi récupérer une énergie cinétique du véhicule pendant les phases de freinage, ou en descente.

Pour optimiser le fonctionnement du moteur thermique 2, notamment pour réduire le nombre de démarrages de ce moteur, et délivrer une forte puissance pendant ses périodes de fonctionnement, on cherche à stocker dans l'accumulateur de pression 8 et à utiliser en une seule fois, la plus grande quantité d'énergie possible.

On notera que dans le cas d'un moteur de recharge électrique à la place du moteur thermique, on peut aussi chercher à réduire la fréquence des démarrages de ce moteur, notamment pour diminuer le nombre des démarrages qui entraînent des pointes de consommation de courant.

La figure 2 présente un accumulateur hydraulique de pression 8 qui, dans un premier cas A, est complètement déchargé ; le circuit de pression hydraulique étant par exemple ouvert et mis directement en liaison avec le réservoir 6.

Dans ce cas, le gaz 10 se détend au maximum, et la membrane 12 descend jusqu'à venir en contact avec une butée inférieure 14 qui limite son expansion au delà. La pression interne du gaz 10 est alors la pression résiduelle P0, et son volume maximum V0 représente la capacité en azote de cet accumulateur 8.

Dans un deuxième cas B, l'accumulateur de pression 8 est légèrement chargé par la pression du fluide, la membrane 12 étant dans sa position basse de fonctionnement, ce qui donne un seuil de pression minimum P1 du gaz 10, et un volume maximum de fonctionnement V1 de ce gaz.

La position basse de fonctionnement de la membrane 12 est la plus basse qui peut être acceptée de manière permanente sans risque de détérioration de cette membrane, pour garantir la fiabilité de l'accumulateur 8. La pression minimum de fonctionnement du circuit hydraulique est donc sensiblement égale à P1.

Dans un troisième cas C, l'accumulateur de pression 8 est fortement chargé par la pression du fluide, la membrane 12 étant dans sa position maximum haute de fonctionnement, ce qui donne une pression maximum P2 dans le gaz 10, et un volume minimum V2 de ce gaz.

Le gaz 10 subit alors entre ces deux volumes maximum V1 et minimum V2, un écart de volume ΔV qui multiplié par la pression correspondante, représente une énergie emmagasinée qui peut être restituée.

En pratique, la pression du gaz 10 doit osciller entre sa valeur minimale P1 et sa valeur maximale P2, en allant si possible d'une valeur extrême à l'autre lors du fonctionnement d'un cycle de recharge et de décharge de l'accumulateur de pression 8, de manière à stocker puis à utiliser en une seule fois, une quantité d'énergie la plus grande possible.

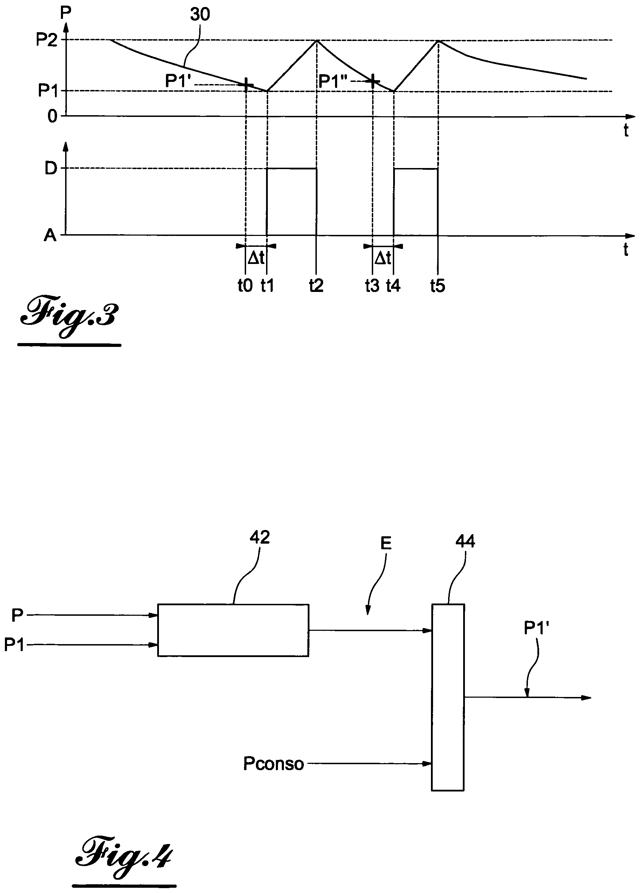

Le graphique de la figure 3 présente en fonction du temps t, dans sa partie supérieure, l'évolution 30 de la pression P de gaz dans l'accumulateur de pression 8 et, dans sa partie inférieure, les démarrages du moteur thermique 2, notés A pour arrêt et D pour démarrage.

L'accumulateur 8 étant chargé au départ à sa pression maximale P2, il se décharge régulièrement au cours de la motorisation du véhicule entraîné par la machine hydraulique 20, qui est utilisée en pompe. Le moteur thermique est à l'arrêt A.

Un calculateur de gestion de la chaîne de traction 1, mettant en oeuvre le procédé de contrôle selon l'invention, mesure à la fois la pression P dans l'accumulateur de pression 8, et sa variation de pression dans le temps ou vitesse de décharge dP/dt, qui est liée à l'utilisation du fluide par la machine hydraulique 20 entraînant un débit de ce fluide.

On notera que le débit de fluide varie notamment en fonction de la pression P dans l'accumulateur 8, du réglage de la cylindrée de la machine hydraulique 20, de la vitesse du véhicule, du couple sur les roues motrices demandé par le conducteur, et du couple résistant dû aux conditions de roulage. Le calculateur de gestion doit contrôler en permanence la vitesse de décharge dP/dt de l'accumulateur 8, qui peut se modifier.

A l'instant t0, la pression étant P1' légèrement supérieure à P1, le procédé détecte qu'avec la vitesse de décharge en cours dP/dt de l'accumulateur 8, sa pression arrivera au seuil minimum P1 à l'instant t1 correspondant à la fin du démarrage D du moteur thermique 2, la pompe 4 commençant effectivement à recharger cet accumulateur. L'écart de temps Δt entre les temps t0 et t1, correspond au temps nécessaire pour le démarrage de ce moteur thermique 2.

On a alors, à partir du temps t1 où la pression est descendue au seuil de pression minimum P1, une remontée de cette pression jusqu'à la pression maximum P2, correspondant au moment t2 où le moteur thermique sera à nouveau arrêté A.

La décharge de l'accumulateur de pression 8 peut ensuite recommencer, avec pour le cycle suivant un écart de temps Δt identique entre les temps t3 et t4, mais avec un départ du temps t3 correspondant à une pression P1" supérieure à P1', car dans ce cas la baisse de pression par rapport au temps dP/dt est supérieure à celle précédente, la machine hydraulique 20 consommant un débit de fluide plus important.

Le schéma fonctionnel de la figure 4 présente des moyens pour la mise en oeuvre du procédé de contrôle selon l'invention.

Un moyen de calcul 42 calcule, à partir de la pression P mesurée en permanence dans l'accumulateur 8, et de la pression de seuil minimum P1 enregistrée en mémoire, le niveau d'énergie disponible E contenu dans cet accumulateur.

Ensuite, un comparateur 44 compare le niveau d'énergie disponible E contenu dans l'accumulateur 8 avec la puissance consommée Pconso par la machine hydraulique 20 à ce moment là, qui représente une variation d'énergie E dans le temps, pour déterminer la pression de démarrage P1' qui déclenchera le démarrage du moteur thermique 2. On s'assure ainsi que compte tenu de la puissance consommée Pconso, l'écart de temps Δt nécessaire pour le démarrage du moteur thermique 2, qui est enregistré en mémoire, est respecté.

On réalise ainsi de manière simple, robuste et efficace, une optimisation du fonctionnement de la chaîne de traction 1. De plus en intégrant le procédé de contrôle dans le calculateur de gestion de cette chaîne de traction 1, et en utilisant des capteurs existants, notamment pour la mesure de la pression du fluide, on peut réaliser ce procédé de manière économique.

En variante, un procédé de contrôle similaire peut être utilisé pour le pilotage du démarrage du moteur thermique 2, afin de recharger plusieurs accumulateurs de pression connectés en parallèle.

## Revendications

1. Procédé de contrôle d'un moteur de recharge (2) entraînant une pompe hydraulique (4) qui recharge au moins un accumulateur de pression (8), cet accumulateur délivrant ensuite la pression hydraulique (P) à une machine hydraulique de traction (20) d'un véhicule hybride, **caractérisé en ce qu'**il tient compte à la fois de la vitesse de décharge de l'accumulateur de pression (8), et du temps de démarrage (Δt) du moteur de recharge (2), pour piloter ce démarrage de manière à ce que cet accumulateur atteigne sensiblement son niveau minimum de pression de fonctionnement (P1) à la fin de ce démarrage (t1).

2. Procédé de contrôle selon la revendication 1, **caractérisé en ce qu'**il calcule (42) un niveau d'énergie disponible (E) contenu dans l'accumulateur de pression (8), à partir de la pression (P) mesurée en permanence dans cet accumulateur, et du niveau minimum de pression de fonctionnement (P1), et **en ce qu'**il compare (44) ce niveau d'énergie disponible (E) avec la puissance hydraulique consommée (Pconso) par la machine hydraulique de traction (20), pour déterminer une pression (P1') correspondant au démarrage du moteur de recharge (2).

3. Procédé de contrôle selon la revendication 2, **caractérisé en ce que** la puissance consommée est calculée en mesurant la variation de pression de l'accumulateur par rapport au temps (dP/dt).

4. Procédé de contrôle selon l'une quelconque des revendications précédentes, **caractérisé en ce que** pour un accumulateur (8) comportant un gaz sous pression (10), le niveau minimum de pression (P1) de l'accumulateur (8), est supérieur à la pression résiduelle de gaz (P0) correspondant à une décharge complète de la pression de fluide dans le circuit hydraulique.

5. Chaîne de traction (1) pour un véhicule hybride, comprenant un moteur de recharge (2) entraînant une pompe hydraulique (4) pour recharger au moins un accumulateur de pression (8) qui alimente une machine hydraulique de traction (20) de ce véhicule, **caractérisée en ce qu'**elle comporte un moyen de calcul (42) qui calcule un niveau d'énergie disponible (E) contenu dans l'accumulateur de pression (8), à partir de la pression (P) mesurée en permanence dans cet accumulateur, et du niveau minimum de pression de fonctionnement (P1), et un moyen de comparaison (44) qui compare ce niveau d'énergie disponible (E) avec la puissance hydraulique consommée (Pconso) par la machine hydraulique de traction (20), pour déterminer une pression (P1') correspondant au démarrage du moteur de recharge (2).

6. Chaîne de traction (1) selon la revendication 5, **caractérisée en ce que** la pompe (4) et la machine hydraulique (20) comportent des cylindrées variables.

7. Chaîne de traction (1) selon la revendication 5 ou 6, **caractérisée en ce que** le moteur de recharge (2) est un moteur thermique.

8. Chaîne de traction (1) selon l'une quelconque des revendications 5 à 7, **caractérisée en ce que** l'accumulateur (8) comporte un gaz sous pression (10).

9. Véhicule hybride comportant une chaîne de traction selon l'une quelconque des revendications 5 à 8.

## Patentansprüche

1. Verfahren zur Steuerung eines Auflademotors (2), der eine Hydraulikpumpe (4) antreibt, die mindestens einen Druckspeicher (8) auflädt, wobei dieser Speicher anschließend den hydraulischen Druck (P) zu einer hydraulischen Antriebsmaschine (20) eines Hybridfahrzeugs liefert, **dadurch gekennzeichnet, dass** es gleichzeitig die Entladegeschwindigkeit des Druckspeichers (8) und die Startzeit (Δt) des Auflademotors (2) berücksichtigt, um dieses Starten derart zu steuern, dass dieser Speicher im Wesentlichen sein Mindest-Betriebsdruckniveau (P1) am Ende dieses Startens (t1) erreicht.

2. Verfahren zur Steuerung nach Anspruch 1, **dadurch gekennzeichnet, dass** es ein Niveau verfügbarer Energie (E), die in dem Druckspeicher (8) enthalten ist, ausgehend von dem Druck (P), der laufend in diesem Speicher gemessen wird, und dem Mindest-Betriebsdruckniveau (P1) berechnet (42), und dass es dieses Niveau verfügbarer Energie (E) mit der durch die hydraulische Antriebsmaschine (20) verbrauchten Hydraulikleistung (Pconso) vergleicht (44), um einen Druck (P1'), der dem Starten des Auflademotors (2) entspricht, zu bestimmen.

3. Verfahren zur Steuerung nach Anspruch 2, **dadurch gekennzeichnet, dass** die verbrauchte Leistung berechnet wird, indem die Druckvariation des Speichers in Bezug zurzeit (dP/dt) gemessen wird.

4. Verfahren zur Steuerung nach einem der vorhergehenden Ansprüche, **dadurch gekennzeichnet, dass** für einen Speicher (8), der ein Gas unter Druck (10) enthält, das Mindest-Druckniveau (P1) des Speichers (8) größer ist als der Gasrestdruck (P0), der einem vollständigen Entladen des Fluiddrucks in dem Hydraulikkreislauf entspricht.

5. Antriebsstrang (1) für ein Hybridfahrzeug, der einen Auflademotor (2) umfasst, der eine Hydraulikpumpe (4) antreibt, um mindestens einen Druckspeicher (8), der eine hydraulische Antriebsmaschine (20) dieses Fahrzeugs antreibt, aufzuladen, **dadurch gekennzeichnet, dass** er ein Rechenmittel (42) umfasst, das ein Niveau an verfügbarer Energie (E), das in dem Druckspeicher (8) enthalten ist, ausgehend von dem Druck (P), der laufend in diesem Speicher gemessen wird, und dem Mindest-Betriebsdruckniveau (P1) berechnet, und ein Vergleichsmittel (44), das dieses Niveau an verfügbarer Energie (E) mit der von der hydraulischen Antriebsmaschine (20) verbrauchten hydraulischen Leistung (Pconso) vergleicht, um einen Druck (P1') zu bestimmen, der dem Starten des Auflademotors (2) entspricht.

6. Antriebsstrang (1) nach Anspruch 5, **dadurch gekennzeichnet, dass** die Pumpe (4) und die hydraulische Maschine (20) variable Hubräume umfassen.

7. Antriebsstrang (1) nach Anspruch 5 oder 6, **dadurch gekennzeichnet, dass** der Auflademotor (2) ein Verbrennungsmotor ist.

8. Antriebsstrang (1) nach einem der Ansprüche 5 bis 7, **dadurch gekennzeichnet, dass** der Speicher (8) ein Gas unter Druck (10) enthält.

9. Hybridfahrzeug, das einen Antriebsstrang nach einem der Ansprüche 5 bis 8 umfasst.

## Claims

1. A method for controlling a refilling motor (2) that drives a hydraulic pump (4) that refills at least one pressure accumulator (8), this accumulator thereafter delivering the hydraulic pressure (P) to a hydraulic traction machine (20) of a hybrid vehicle, **characterized in that** it takes account both of the rate of discharge of the pressure accumulator (8) and of the time to start (Δt) the refilling motor (2) so as to manage this start in such a way that this accumulator more or less reaches its minimum operating pressure level (P1) at the end of this start (t1).

2. The method for controlling according to Claim 1, **characterized in that** it calculates (42) an available energy level (E) contained in the pressure accumulator (8), from the pressure (P) measured continually in this accumulator, and from the minimum operating pressure level (P1), and **in that** it compares (44) this available energy level (E) with the consumed hydraulic power (Pconso) by the hydraulic traction machine (20), to determine a pressure (P1') corresponding to the start of the refilling motor (2).

3. The method for controlling according to Claim 2, **characterized in that** the consumed power is calculated by measuring the variation in pressure of the accumulator with respect to the time (dP/dt).

4. The method for controlling according to any one of the preceding claims, **characterized in that** for an accumulator (8) comprising a gas under pressure (10), the minimum pressure level (P1) of the accumulator (8) is greater than the residual gas pressure (P0) corresponding to a complete discharge of the fluid pressure in the hydraulic circuit.

5. A traction chain (1) for a hybrid vehicle, including a refilling motor (2) that drives a hydraulic pump (4) for refilling at least one pressure accumulator (8) which supplies a hydraulic traction machine (20) of this vehicle, **characterized in that** it comprises a calculation means (42) which calculates an available energy level (E) contained in the pressure accumulator (8), from the pressure (P) continually measured in this accumulator, and from the minimum operating pressure level (P1), and a comparison means (44) which compares this available energy level (E) with the consumed hydraulic power (Pconso) by the hydraulic traction machine (20), to determine a pressure (P1') corresponding to the start of the refilling motor (2).

6. The traction chain (1) according to Claim 5, **characterized in that** the pump (4) and the hydraulic machine (20) comprise variable displacements.

7. The traction chain (1) according to Claim 5 or 6, **characterized in that** the refilling motor (2) is a heat engine.

8. The traction chain (1) according to any one of Claims 5 to 7, **characterized in that** the accumulator (8) comprises a gas under pressure (10).

9. A hybrid vehicle comprising a traction chain according to anyone of Claims 5 to 8.
